# EUROPÄISCHE PATENTSCHRIFT

(11) **EP 1 240 253 B1**
(45) Veröffentlichungstag und Bekanntmachung des Hinweises auf die Patenterteilung: **23.06.2004**
(21) Anmeldenummer: 00976032.3
(22) Anmeldetag: 16.11.2000
(51) Int. Cl.: C09B 67/10

(54) **FINISHBEHANDLUNG VON PIGMENTEN IN FLÜSSIGEM ODER ÜBERKRITISCHEM CO2**
FINISHING TREATMENT OF PIGMENTS IN LIQUID OR SUPERCRITICAL CO2
TRAITEMENT DE FINITION DE PIGMENTS DANS DU CO2 LIQUIDE OU SUPERCRITIQUE

(30) Priorität: 10.12.1999 DE 19959661
(43) Veröffentlichungstag der Anmeldung: 18.09.2002
(73) Patentinhaber: Clariant GmbH, 65929 Frankfurt am Main (DE)
(72) Erfinder: JUNG, Rüdiger, 65779 Kelkheim (DE); KUND, Klaus, 65558 Langenscheid (DE); NESTLER, Bernd Clariant (Japan) K.K., Shizuoka 437-1496 (JP); SCHMIDT, Martin, U., 65931 Frankfurt am Main (DE); UNVERDORBEN, Leonhard, 61130 Nidderau (DE); STEINER, Rudolf, 91056 Erlangen (DE)
(74) Vertreter: Hütter, Klaus, Dr.
(86) Internationale Anmeldenummer: PCT/EP2000/011347
(87) Internationale Veröffentlichungsnummer: WO 2001/042370

(56) Entgegenhaltungen:
- EP-A- 0 036 520

## Beschreibung

Die vorliegende Erfindung liegt auf dem Gebiet organischer Buntpigmente. Es ist bekannt, dass organische Pigmente, insbesondere Azopigmente, aus der Syntheselösung in kleinen unlöslichen Teilchen (Primärkristalliten) ausfallen, die noch einer Nachbehandlung (Finish) bedürfen. Dabei müssen physikalische Eigenschaften, wie Kristallform, Kristallgröße und -güte, sowie Teilchengrößenverteilung in Richtung auf ein gewünschtes Optimum verändert werden. Trocknet man nämlich einen Rohpigment-Preßkuchen direkt nach der Synthese und dem Waschen, so lagern sich die Primärteilchen oft in erheblichem Maße zu Agglomeraten und Aggregaten zusammen. Das führt zu kornharten, farbschwachen und schlecht dispergierbaren Pigmenten, die sich oft auch durch Mahlung nicht mehr in eine anwendungstechnisch brauchbare Form bringen lassen.
Polycyclische Pigmente fallen aus der Syntheselösung meist als grobkristalline Rohpigmente aus, die anschließend durch geeignete Verfahren, wie z.B. Mahlung, feinverteilt werden müssen. Die so erhaltenen Präpigmente bedürfen in den meisten Fällen ebenfalls einer Nachbehandlung, um die gewünschten physikalischen Eigenschaften zu erzielen.

Der übliche Pigmentfinish ist eine thermische Nachbehandlung, wobei durch Erhitzen der Pigment-Rohsuspension oder des salzfrei gewaschenen, isolierten und wieder angeteigten Pigmentpreßkuchens in Wasser und/oder organischen Lösemitteln eine bessere Ausbildung von Kristallen erreicht wird. Dabei wird der Feinstkornanteil, der besonders für die Agglomerationsneigung der Pigmente verantwortlich ist, verringert und folglich eine engere Korngrößenverteilung erzielt. In organischen Lösemitteln werden besonders schwerlösliche Pigmente bei Temperaturen von 80 bis 150°C nachbehandelt. Es werden dafür z.B. Alkohole, Eisessig, Chlorbenzol, o-Dichlorbenzol und Dimethylformamid verwendet.

Die bislang üblichen Finishverfahren sind apparativ und energetisch aufwendig, da oftmals unter Druck geheizt und das Lösungsmittel abdestilliert wird. Da organische Lösungsmittel meist brennbar sind, müssen entsprechende Maßnahmen zur Anlagensicherheit getroffen werden.

In EP-A-0,036,520 werden lösungsmittel-haltige Zubereitungen gefinishter Pigmente mit flüssigem bzw. überkritischem Köhlendioxid behandelt.

Die Aufgabe der vorliegenden Erfindung bestand darin, ein geeignetes Finishverfahren für organische Pigmente bereitzustellen, das im Hinblick auf Sicherheit, Umweltverträglichkeit und Resourceneinsatz dem bislang üblichen Lösemittelfinish überlegen ist.

Es wurde gefunden, dass flüssiges oder überkritisches Kohlendioxid überraschenderweise ein geeignetes Finishmedium für organische Pigmente ist.

Gegenstand der vorliegenden Erfindung ist daher ein Verfahren zur Nachbehandlung organischer Pigmente, dadurch gekennzeichnet, dass man das, gegebenenfalls gemahlene, organische Rohpigment in Form eines trockenen Pulvers und flüssiges oder überkritisches Kohlendioxid aufeinander einwirken läßt.

Zweckmäßigerweise wird dabei so verfahren, dass man die nach der Pigmentsynthese oder die nach einer Feinverteilung, z.B. durch Mahlung, vorliegende Suspension des Rohpigments filtriert, wäscht, zum Pulverrohpigment trocknet und mit flüssigem oder überkritischem CO₂ versetzt.

Die erfindungsgemäße Nachbehandlung wird zweckmäßigerweise in einem beheizbaren Autoklaven mit Rührvorrichtung durchgeführt. Es ist nicht erforderlich, die im Autoklaven noch befindliche Restluft abzupumpen. Kohlendioxid kann in Form von Trockeneis oder durch Zupumpen von gasförmigem oder flüssigem CO₂ zugegeben werden, wobei die Menge so berechnet ist, dass sich bei der gewünschten Temperatur ein solcher Druck einstellt, bei dem CO₂ in überkritischem oder flüssigem Zustand vorliegt. Der bevorzugte Temperaturbereich liegt zwischen 31,2°C und 250°C, besonders bevorzugt zwischen 50 und 200°C, insbesondere zwischen 80 und 180°C, für überkritisches CO₂. Der sich dabei einstellende Druck beträgt 73,8 bar bis vorzugsweise 400 bar, besonders bevorzugt zwischen 75 und 300 bar, insbesondere zwischen 80 und 250 bar. Für flüssiges CO₂ ist der bevorzugte Temperaturbereich 10 bis 31,2°C, insbesondere 20 bis 31°C.
Relativ zum Gewicht des Rohpigments wird das CO₂ zweckmäßig in einer Menge (CO₂: Pigment) von (0,2 : 1) bis (200 : 1), bevorzugt (0,5 : 1) bis (10 : 1), eingesetzt.
Die Dauer der Nachbehandlung kann in weiten Grenzen schwanken, zweckmäßig sind 10 Minuten bis 10 Stunden, vorzugsweise ½ bis 5 Stunden. Anschließend wird der Autoklav auf Normaldruck entspannt und entleert.

Es kann vorteilhaft sein, die erfindungsgemäße Nachbehandlung in Gegenwart von Wasser oder organischen Lösemitteln, wie z.B. Kohlenwasserstoffen, Alkoholen, Ethem, Aminen, Carbonsäuren, Carbonsäureestern oder-amiden, wie z.B. N-Methylpyrrolidon, durchzuführen. Vorzugsweise sollte dabei höchstens so viel Wasser oder Lösemittel zugegeben werden, wie bei den gegebenen Bedingungen in Kohlendioxid löslich ist. So sind beispielsweise bei 75°C und 200 bar etwa 5 g Wasser pro Kilogramm CO₂ löslich.

Die erfindungsgemäße Nachbehandlung kann bei allen organischen Buntpigmenten, wie Azopigmenten und polycyclischen Pigmenten, vorgenommen werden. Azopigmente können Monoazo-, Disazo-, Disazokondensations-, Naphthol- oder Metallkomplexpigmente sein.

Als Azopigmente kommen insbesondere C.I. Pigment Yellow 16, 32, 83, 97, 120, 151, 154, 155, 175, 180, 181, 191, 194, 213, Pigment Orange 34, 36, 38, 62, 72, 74, Pigment Red 53:2, 112, 122, 137, 144, 170, 171, 175, 176, 185, 187, 188, 208, 214, 242, 247, 253; Pigment Violet 32; Pigment Brown 25 in Betracht.

Polycyclische Pigmente können z.B. Isoindolinon-, Isoindolin-, Anthanthron-, Thioindigo-, Chinophthalon-, Anthrachinon-, Dioxazin-, Phthalocyanin-, Chinacridon-, Perylen-, Perinon-, Diketopyrrolopyrrol-, Thiazoindigo- und Azomethin-Pigmente sein, insbesondere Pigment Violet 19, 23, Pigment Blue 15, Pigment Green 7, 36, 37, Pigment Red 122, Pigment Yellow 139.

Es zeigte sich, dass die erfindungsgemäße Nachbehandlung den bislang üblichen wässrigen oder Lösemittel-Finish ersetzen kann. Darüber hinaus können sich bei einigen Pigmenten, in Abhängigkeit von Temperatur, Druck, Behandlungsdauer und Wasserzugabe, überraschenderweise noch weitere physikalische Eigenschaften ändern, wie z.B. die Kristallmodifikation oder das Verhältnis der gebildeten Kristallmodifikationen.

So entsteht z.B. aus rohem P.R. 170 der α-Phase durch die erfindungsgemäße Nachbehandlung ein gefinishtes P.R. 170 mit einem Anteil an γ-Phase.

In den nachfolgenden Beispielen wurden die coloristischen Eigenschaften der erhaltenen Pigmentproben im Alkyd-Melamin-Einbrennlack AM 5 durch Vergleichsmessungen bestimmt; als Referenz dienten jeweils die unbehandelten Proben.
Die Bewertung der Aufhellung erfolgte durch farbmetrische Messung der CIELAB-System gemäß DIN 6174; gemessen wurde an einem PCM-Gerät der Firma Gardner, wobei jeweils der Mittelwert aus drei Einzelwerten gebildet wurde. Die Bewertung des Volltons wurde visuell unter einer Abmusterungslampe entsprechend ASTM D1729 mit Tageslicht (CIE D65) durchgeführt.

### Beispiel 1 (Vergleichsbeispiel)

Eine Suspension von 90 g P.R. 170 (α-Phase) in 1,7 I Wasser wurde mit 480 ml Isobutanol versetzt und das Gemisch in einem Autoklaven 1 Stunde bei einer Temperatur von 140°C gerührt. Nach Abkühlen und Entspannen des Autoklaven wurde der Inhalt des Autoklaven in eine Destillationsapparatur überführt und das Lösungsmittel durch Wasserdampfdestillation abgetrennt. Die erhaltene wässrige Pigmentsuspension wurde filtriert, der Filterkuchen mit 8 I Wasser nachgewaschen und 15 Stunden im Trockenschrank bei 100°C getrocknet. Es entsteht P.R. 170 in der β-Phase.

### Beispiele 2 bis 7: CO₂-Finish

100 g Rohpigment P.Red 170 (Pulver, α-Phase) wurden in einem 1,7 I-Autoklaven vorgelegt. Nach Erhitzen auf 139°C wurde durch Zupumpen von Kohlendioxid ein Druck von 83 bar eingestellt. Nachdem sich der Inhalt des Autoklaven erwärmt hatte und die eingestellten Bedingungen konstant waren, wurde 1 Stunde, 4 Stunden oder 5 Stunden bei diesen Bedingungen gehalten. Im Anschluß an eine 10-minütige Abkühlphase wurde der Autoklav entspannt und das Pigment entnommen.

Gemäß nachstehender Tabelle wurden die Finishbedingungen variiert:

| Bsp. Nr. | t [h] | Finishbed. | | | Kristallphase Haupt-/Neben- | Farbmetrik | | |
|---|---|---|---|---|---|---|---|---|
| | | T[°C] | p [bar] | | | FS | dH | dC |
| | - | - | - | unbehandelt | α | | Referenz | |
| 2 | 1 | 139 | 83 | | γ hoher Anteil α und β | a) | f) | h) |
| 3 | 1 | 140 | 238 | | γ hoher Anteil α und β | b) | f) | i) |
| 4 | 4 | 138 | 80 | | γ größere Anteile α und β | b) | e) | i) |
| 5 | 4 | 139 | 238 | | γ ca. 30 % β, deutliche Anteile α | b) | f) | i) |
| 6 | 5 | 150 | 240 | 1h 139°C, 4h 150°C | γ ca. 30 % β, deutliche Anteile α | b) | d) | g) |
| 7 | 4 | 173 | 240 | | γ ca. 20 % β | c) | d) | j) |
| 8 | 4 | 42 | 80 | | α | a) | d) | h) |
| 9 | 4 | 27 | 70 | flüssiges CO₂ | α | a) | d) | g) |

| | | | | | | | | |
|---|---|---|---|---|---|---|---|---|
| a) merklich farbstärker | | | | | | | | |
| b) deutlich farbstärker | | | | | | | | |
| c) wesentlich farbstärker | | | | | | | | |
| d) etwas gelber | | | | | | | | |
| e) merklich blauer | | | | | | | | |
| f) wesentlich blauer | | | | | | | | |
| g) Spur reiner | | | | | | | | |
| h) merklich reiner | | | | | | | | |
| i) deutlich reiner | | | | | | | | |
| j) wesentlich reiner | | | | | | | | |

### Beispiel 10: CO₂-Finish mit Wasserzusatz

100 g Rohpigment P. Red 170 (Pulver, α-Phase) wurden in einem Autoklaven vorgelegt. Vor der Kohlendioxidzugabe wurden zusätzlich 3 g Wasser in den Autoklaven gegeben. Es wurde auf 139°C erhitzt, durch Zupumpen von CO₂ ein Druck von 240 bar eingestellt und 4 Stunden unter diesen Bedingungen gerührt. Nach dem Abkühlen wurde das gefinishte Pigment entnommen: Verhältnis γ-Phase zu β-Phase etwa 7:3. Das Produkt ist bedeutend farbstärker, merklich blauer und wesentlich reiner als die Referenz.

Unter der α-Phase von P.R. 170 wird diejenige Kristallmodifikation verstanden, die sich durch folgende charakteristische Linien im Röntgenpulverdiagramm auszeichnet (Cu-K_{α}-Strahlung, 20-Werte in Grad): 7.6 (stark), 25.7 (stark), 5.2, 8.2, 11.7, 13.5, 15.9, 18.9, 23.5 (alle mittelstark).
Unter der β-Phase versteht man diejenige Kristallmodifikation von P.R.170, die sich durch folgende charakteristische Linien im Röntgenpulverdiagramm auszeichnet: 25.5 (stark), 7.1, 8.2, 11.3, 12.8, 15.1, 17.9 (alle schwach).
Die γ-Phase zeichnet sich durch folgende Linien aus: 25.7 (stark), 7.3, 11.3, 12.9, 15.4, 18.2 (alle mittelstark).
Alle Linienlagen aller Modifikationen aller Pigmente sind mit einer Ungenauigkeit von ± 0.2° behaftet.

### Beispiel 11

Man verfährt wie in Beispiel 10, setzt jedoch P.R.53:2 (Pulver, α-Phase) statt P.Red 170 ein. Man erhält ein Gemisch aus α- und γ-Phase im Verhältnis etwa 1:1, das durch folgende Linien im Röntgenpulverdiagramm charakterisiert wird: 4.4,5.0,5.7 (alle stark), 25.0, 25.8 (beide mittelstark), 6.6, 8.7, 9.7, 10.1, 13.8, 14.5, 15.3, 16.7, 17.7, 18.0, 18.5, 23.2, 26.5 (alle schwach).

Das entstandene Produkt ist gegenüber dem Ausgangspigment etwas röter.

### Beispiele 12 bis 15:

100 g Pulver der folgenden Rohpigmente wurden in einem 1,7 I-Autoklaven vorgelegt. Nach Erhitzen auf 140°C wurde durch Zupumpen von Kohlendioxid ein Druck von 240 bar eingestellt und 4 Stunden unter diesen Bedingungen gehalten. Anschließend wurde der Autoklav entspannt und das gefinishte Pigment entnommen:
12) C.I. Pigment Yellow 151
13) C.I. Pigment Yellow 180
14) C.I. Pigment Yellow 83
15) C.I. Pigment Orange 36
Man erhielt in allen Fällen ein kornweiches Pigment mit guten anwendungstechnischen Eigenschaften.

### Beispiel 16: Polycyclisches Pigment

100 g Pulver C.I. Pigment Red 122 (Rohpigment) wurden in einem 1,7 I-Autoklaven vorgelegt. Nach Erhitzen auf 140°C wurde durch Zupumpen von Kohlendioxid ein Druck von 240 bar eingestellt und 4 Stunden unter diesen Bedingungen gehalten. Anschließend wurde der Autoklav entspannt und das gefinishte Pigment entnommen. Man erhielt ein kornweiches Pigment mit guten anwendungstechnischen Eigenschaften.

### Beispiel 17: Polycyclisches Pigment mit Wasserzusatz

100 g Pulver C.I. Pigment Violet 23 (Rohpigment) und 20 g Wasser wurden in einem 1,7 I-Autoklaven vorgelegt. Nach Erhitzen auf 125°C wurde durch Zupumpen von Kohlendioxid ein Druck von 240 bar eingestellt und 4 Stunden unter diesen Bedingungen gehalten. Anschließend wurde der Autoklav entspannt und das gefinishte Pigment entnommen. Man erhielt ein kornweiches Pigment mit guten anwendungstechnischen Eigenschaften.

### Beispiel 18: Finish mit Zusatz von NMP (N-Methylpyrrolidin-2-on)

100 g rotbraunes Rohpigment P.Y. 213 und 4,9 g NMP wurden in einem 1,7 I-Autoklaven vorgelegt. Nach Erhitzen auf 160°C wurde durch Zupumpen von CO₂ ein Druck von 243 bar eingestellt und 4 Stunden unter diesen Bedingungen gerührt. Nach Entspannen wurde das gefinishte Pigment entnommen. Im Vergleich zum rotbraun gefärbten, in AM 5 Lack schwer dispergierbaren Ausgangspigment ist das entstandene Produkt gelb und leicht dispergierbar und eignet sich z.B. zur Herstellung von Metallic-Lacken.

## Patentansprüche

1. Verfahren zur Nachbehandlung organischer Pigmente, **dadurch gekennzeichnet, dass** man das, gegebenenfalls gemahlene, organische Rohpigment in Form eines trockenen Pulvers und flüssiges oder überkritisches Kohlendioxid aufeinander einwirken läßt.

2. Verfahren nach Anspruch 1, **dadurch gekennzeichnet, dass** die Nachbehandlung mit überkritischem CO₂ bei einer Temperatur zwischen 31,2°C und 250°C und einem Druck zwischen 73,8 bar und 400 bar durchgeführt wird.

3. Verfahren nach Anspruch 1 oder 2, **dadurch gekennzeichnet, dass** die Nachbehandlung mit überkritischem CO₂ bei einer Temperatur zwischen 50 und 200°C und einem Druck zwischen 75 und 300 bar durchgeführt wird.

4. Verfahren nach Anspruch 1 oder 2, **dadurch gekennzeichnet, dass** die Nachbehandlung mit flüssigem CO₂ bei einer Temperatur zwischen 10 und 31,2°C durchgeführt wird.

5. Verfahren nach einem oder mehreren der Ansprüche 1 bis 4, **dadurch gekennzeichnet, dass** die Gewichtsmenge CO₂ : Pigment zwischen 0,2:1 und 200:1 liegt.

6. Verfahren nach einem oder mehreren der Ansprüche 1 bis 5, **dadurch gekennzeichnet, dass** die Dauer der Nachbehandlung 10 Minuten bis 10 Stunden beträgt.

7. Verfahren nach einem oder mehreren der Ansprüche 1 bis 6, **dadurch gekennzeichnet, dass** die Nachbehandlung in Gegenwart von Wasser oder organischem Lösemittel durchgeführt wird.

8. Verfahren nach Anspruch 7, **dadurch gekennzeichnet, dass** höchstens so viel Wasser oder organisches Lösemittel zugegeben wird, wie sich in dem CO₂ bei den eingestellten Druck- und Temperaturbedingungen lösen.

9. Verfahren nach einem oder mehreren der Ansprüche 1 bis 8, **dadurch gekennzeichnet, dass** das Pigment ein Azopigment oder ein polycyclisches Pigment ist.

## Claims

1. A process for aftertreating organic pigments, which comprises causing the ground or unground crude organic pigment, in the form of a dry powder, and liquid or supercritical carbon dioxide to act on one another.

2. The process as claimed in claim 1, wherein the aftertreatment is conducted with supercritical CO₂ at a temperature between 31.2°C and 250°C and a pressure between 73.8 bar and 400 bar.

3. The process as claimed in claim 1 or 2, wherein the aftertreatment is conducted with supercritical CO₂ at a temperature between 50 and 200°C and a pressure between 75 and 300 bar.

4. The process as claimed in claim 1 or 2, wherein the aftertreatment is conducted with liquid CO₂ at a temperature between 10°C and 31.2°C.

5. The process as claimed in one or more of claims 1 to 4, wherein the weight ratio of CO₂ to pigment is between 0.2:1 and 200:1.

6. The process as claimed in one or more of claims 1 to 5, wherein the duration of the aftertreatment is from 10 minutes to 10 hours.

7. The process as claimed in one or more of claims 1 to 6, wherein the aftertreatment is conducted in the presence of water or organic solvent.

8. The process as claimed in claim 7, wherein the amount of water or organic solvent added is at most the amount which dissolves in the CO₂ under the established pressure and temperature conditions.

9. The process as claimed in one or more of claims 1 to 8, wherein the pigment is an azo pigment or a polycyclic pigment.

## Revendications

1. Procédé de retraitement de pigments organiques, **caractérisé en ce qu'**on fait réagir entre eux le pigment organique brut, éventuellement broyé, sous la forme d'une poudre sèche et du dioxyde de carbone liquide ou surcritique.

2. Procédé selon la revendication 1, **caractérisé en ce qu'**on réalise le retraitement avec du CO₂ surcritique à une température comprise entre 31,2°C et 250°C et à une pression comprise entre 73,8 bar et 400 bar.

3. Procédé selon la revendication 1 ou 2, **caractérisé en ce qu'**on réalise le retraitement avec du CO₂ surcritique à une température comprise entre 50°C et 200°C et à une pression comprise entre 75 et 300 bar.

4. Procédé selon la revendication 1 ou 2, **caractérisé en ce qu'**on réalise le retraitement avec du CO₂ liquide à une température comprise entre 10 et 31,2°C.

5. Procédé selon une ou plusieurs des revendications 1 à 4, **caractérisé en ce que** la quantité en poids de CO₂ : pigment se situe entre 0,2 : 1 et 200 : 1.

6. Procédé selon une ou plusieurs des revendications 1 à 5, **caractérisé en ce que** la durée du retraitement est de 10 minutes à 10 heures.

7. Procédé selon une ou plusieurs des revendications 1 à 6, **caractérisé en ce qu'**on réalise le retraitement en présence d'eau ou d'un solvant organique.

8. Procédé selon la revendication 7, **caractérisé en ce qu'**on ajoute au maximum la quantité d'eau ou de solvant organique qui se dissout dans le CO₂ dans les conditions de température et de pression ajustées.

9. Procédé selon une ou plusieurs des revendications 1 à 8, **caractérisé en ce que** le pigment est un pigment azoïque ou un pigment polycyclique.
